(19) **Europäisches Patentamt / European Patent Office / Office européen des brevets**

(11) **EP 3 534 294 B1**

(12) **EUROPEAN PATENT SPECIFICATION**

(45) Date of publication and mention
of the grant of the patent:
**06.09.2023 Bulletin 2023/36**

(51) International Patent Classification (IPC):
**G06V 20/52** (2022.01)    **G06V 10/82** (2022.01)
**G06V 10/44** (2022.01)    **G06V 10/764** (2022.01)

(21) Application number: **18159762.6**

(22) Date of filing: **02.03.2018**

(52) Cooperative Patent Classification (CPC):
**G06V 10/454; G06V 10/764; G06V 10/82; G06V 20/52**

(54) **COMPUTER IMPLEMENTED METHOD FOR PROCESSING A FRAME SEQUENCE, DIGITAL FRAME PROCESSING DEVICE COMPUTER PROGRAM PRODUCT AND MONITORING SYSTEM**

COMPUTERIMPLEMENTIERTES VERFAHREN ZUR VERARBEITUNG EINER RAHMENSEQUENZ, COMPUTERPROGRAMMPRODUKT EINER DIGITALEN RAHMENVERARBEITUNGSVORRICHTUNG UND ÜBERWACHUNGSSYSTEM

PROCÉDÉ MIS EN ŒUVRE PAR ORDINATEUR POUR TRAITER UNE SÉQUENCE DE TRAMES, DISPOSITIF DE TRAITEMENT DE TRAME NUMÉRIQUE, PRODUIT-PROGRAMME D'ORDINATEUR ET SYSTÈME DE SURVEILLANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2019 Bulletin 2019/36**

(73) Proprietor: **Akademia Gorniczo-Hutnicza im. Stanislawa Staszica w Krakowie 30-059 Krakow (PL)**

(72) Inventors:
• **Grega, Micha**
  **30-212 Kraków (PL)**
• **Dziech, Andrzej**
  **30-112 Kraków (PL)**
• **Rusek, Krzysztof**
  **33-322 Lipnica Wielka (PL)**
• **Matiolanski, Andrzej**
  **31-411 Kraków (PL)**
• **Guzik, Piotr**
  **38-400 Krosno (PL)**

(74) Representative: **Bury, Marek Bury & Bury ul. Przyczolkowa 124 02-968 Warszawa (PL)**

(56) References cited:
EP-A2- 1 308 896        WO-A1-2008/046662
US-A1- 2005 105 765    US-A1- 2018 012 085

• MOHAMMAD SABOKROU ET AL: "Fully Convolutional Neural Network for Fast Anomaly Detection in Crowded Scenes", ARXIV.ORG, CORNELL UNIVERSITY LIBRARY, 201 OLIN LIBRARY CORNELL UNIVERSITY ITHACA, NY 14853, 3 September 2016 (2016-09-03), XP080723901, DOI: 10.1016/J.CVIU.2018.02.006

## Description

The invention concerns a computer implemented method for processing a frame sequence to detect a dangerous object, a digital frame processing device therefore, a computer program product and monitoring system with automatic enhancement of detection of events involving use of dangerous objects. Dangerous object can be understand as gun, axe, knife, riffle or any other potentially dangerous tool not used normally within a monitored facility.

US patent no US6028626 discloses a surveillance system having at least one primary video camera for translating real images of a zone into electronic video signals at a first level of resolution. The system includes means for sampling movements of an individual or individuals located within the zone from the video signal output from at least one video camera. Video signals of sampled movements of the individual is electronically compared with known characteristics of movements which, are indicative of individuals having a criminal intent. The level of criminal intent of the individual or individuals is then determined and an appropriate alarm signal is produced. In an attempt to analyze behavioral patterns to determine criminal intent it is very difficult to avoid false alarms. False alarms on the other hand tend to "train" people using surveillance system not to react to the situations identified as dangerous.

US patent no US9524426 discloses a human monitoring system that includes a plurality of cameras and a visual processor. The plurality of cameras are disposed about a workspace area, where each camera is configured to capture a video feed that includes a plurality of image frames, and the plurality of image frames are time-synchronized between the respective cameras. The visual processor is configured to receive the plurality of image frames from the plurality of vision-based imaging devices and detect the presence of a human from at least one of the plurality of image frames using pattern matching performed on an input image. The input image to the pattern matching is a sliding window portion of the image frame that is aligned with a rectified coordinate system such that a vertical axis in the workspace area is aligned with a vertical axis of the input image. Publication WO2008046662 A1 of international patent application discloses a method for the surveillance of danger zones, especially platforms in stations, that is based on a specific detection geometry dividing the supervision area in pairs of trapezoids, using one trapezoid for detection and the other trapezoid for qualification of detections. The detection geometry is combined with sensitive detection and qualification steps based on video image analysis. In order to increase in a quantitatively measurable manner the sensitivity towards optic changes by an object, pixel grey value changes had been grouped into specific sub-matrices of N-by-N pixels. After experimentation of a larger variation of matrix lengths N the analysis showed that the results remain insensitive to stochastic changes above 5 pixels. Due to geometric gauging, an image sub-matrix of 7-by-7 pixels had been retained, grouping 49 pixels in a sub-matrix. The associated size of this sub-matrix is well below the detection threshold of 30 cm in all cases (e.g. in the extreme case of the most remote trapeze) so the geometrical resolution is sufficient in all geometries. Use of convolutional neural networks to detect anomalies in videos has been disclosed in a paper by M Sabokrou, M Fayyaz, M Fathy, Z Moayed, Deep-anomaly: Fully convolutional neural network for fast anomaly detection in crowded scenes.

An aim of the invention is to provide reliable automatic means aiding a human supervisor in detection of dangerous situations involving dangerous objects enhancing his reaction time. This aim is obtained with a computer implemented method for processing a frame sequence to generate an alarm when a dangerous object is being used, including a frame acquisition step, a division into sub-regions step, object identification step and decision making step, in which alert generation step is executed, if decision made in decision making step is positive. Division into sub-regions step includes division of the frame into sub-regions that overlap and have at least 100x100 pixels - neural network recognition of dangerous objects is more reliable above this value. Use of overlapping sub-regions reduces a risk of object located on the border of sub-regions not being detected. Object identification step is executed in sub-region by sub-region manner and includes processing a frame with a deep neural network trained to detect the dangerous object and returns probability of detection for sub-regions of the frame formed into probability map corresponding to the processed frame. Application of deep neural network enables efficient detection and robust training. Decision made in decision making step depends on at least a first criterion and a second criterion applying to the subsequent frames and corresponding probability maps. The first criterion includes probability of detection within a predefined number N of subsequent frames being above predefined value of $p_{min}$. The second criterion includes the minimal distance between sub-regions in which probability of detection above predefined value of $p_{min}$ was observed in subsequent frames being lower than given value $d_{max}$. It has been shown that if the alerts are too frequent people supervising the monitoring systems tend to react slower or ignore the alerts. One false alert daily was identified as reasonable maximum. Therefore, the specificity is crucial for the dangerous objects recognition system. Combination of criterions in the method according to the invention enable obtaining enough specificity for the number of the false alarms not to exceed one daily.

Advantageously the value of $d_{max}$ is predetermined in system calibration or is a result of Kalman filtering of probability map.

Advantageously the frames and the corresponding probability maps are stored into database. Storing the frames and probability maps enable adaptation of the neural network training for specific situations.

Frame acquisition advantageously includes background detection and removal which saves computational power and further reduces number of false alarms.

Probability map is advantageously subjected to high pass filtration prior to being used in decision making step. Consequently only dynamic situations are detected and false alarms are further avoided while system remains sensitive to typical dangerous situations.

The method according to the invention advantageously further includes a load balancing step, in which computational load of particular step is determined and if needed some of the input frames are dropped.

The aim of the invention is further obtained by providing a digital frame processing device having a memory and adapted to receive a frame sequence and means to generate an alarm according to the invention is adapted to execute a method according to the invention.

The device is advantageously adapted to receive at least two frame sequences in parallel and process them in parallel.

The aim of the invention is further obtained by providing a computer program product comprising a set of instructions causing a frame processing device execute a method according to the invention.

The aim of the invention is also obtained by providing a monitoring system having at least one camera delivering frames via communication means to console having a display in monitoring center, in which frames from camera are processed with a digital frame processing device according to the invention executing a method according to invention. In such configuration system size is not limited by computing power even when high number of cameras are used.

The monitoring system advantageously has at least two cameras.

Advantageously each of the at least two cameras is connected to an individual digital frame processing device. Alternatively both of the at least two cameras are connected to the same digital frame processing device.

Communication means advantageously are telecommunication network. Use of tcpip network makes system very flexible and easy to install in typical facilities.

The invention has been described below in detail, with reference to the following figures:

Fig. 1 showing a flow chart of the embodiment of a method according to the invention;
Fig. 2 showing a block diagram of a digital frame processing device according to the invention;
Fig. 3a and Fig. 3b showing conversion of image to sub-regions and probability map;
Fig. 4 showing sequence of images with moving gun and respective probability map;
Fig. 5 shows the block diagram of the embodiment of deep neural network;
Fig. 6 shows a flowchart of decision making;
Fig. 7 shows a monitoring system with a plurality of cameras and frame processing devices according to the invention connected to the human operated monitoring center.

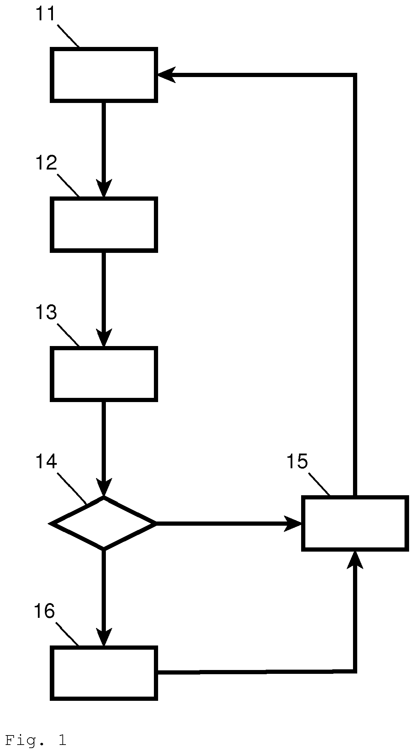

A block diagram of an embodiment of the method according to the invention is shown in Fig. 1. The method is running on a digital processing device with implemented modules performing particular steps. The method comprises a frame acquisition 11 in which a frame is received from external imaging device, a CCD camera. In this step the frame is preprocessed. Subsequently a step of division into sub-regions 12 is executed. The frame is divided into a number of overlapping sub-regions preferably rectangles having a lower dimension of at least 100 pixels. These sub-regions 32 are used in object identification 13. Each sub-region 32 is independently processed using deep neural network trained to detect the dangerous object - a hand carrying a gun. The output of neural network is a probability of detection for every sub-region. The probabilities form a probability map which is used in subsequent decision making step. The decision is based on a results of detection in 8 subsequent frames. Two criterions are applied. The first criterion includes probability of detection within a predefined number 8 of subsequent frames being above predefined threshold value of $p_{min}$. Threshold value of $p_{min}$ is selected from a range $0.8 \div 1$ depending on the object to be recognized. Value optimal for handgun falls between 0.95 and 0.98. Good results were obtained for 0.96. The second criterion depends on the minimal distance between sub-regions in which probability of detection above predefined value of $p_{min}$ was observed in subsequent frames being lower than given value $d_{max}$ which preferably is in a range of 0.3 to 1 of the sub-region lower dimendion. It allows reduction of the number of false alarms. The value of $d_{max}$ is estimated using genetic algorithm according to Mitchell, Melanie (1996). An Introduction to Genetic Algorithms. Cambridge, MA: MIT Press. ISBN 9780585030944. The algorithm's fitness function is based on following factors: maximization of True Positive (TP) rate, maximization of TP frames for each detected event and minimization of False Positive detections. The sub-optimal value of $d_{max}$ is chosen according to Pareto meaning.

If both criteria are met alert generation 16 step is executed. It is a sound alarm, visual alarm, email, text messages (SMS), video messages, voice messages (Calls), on-screen alert, API to existing on-site alarm installations, API to remote alarm installations or law enforcement services or any combination of the above.

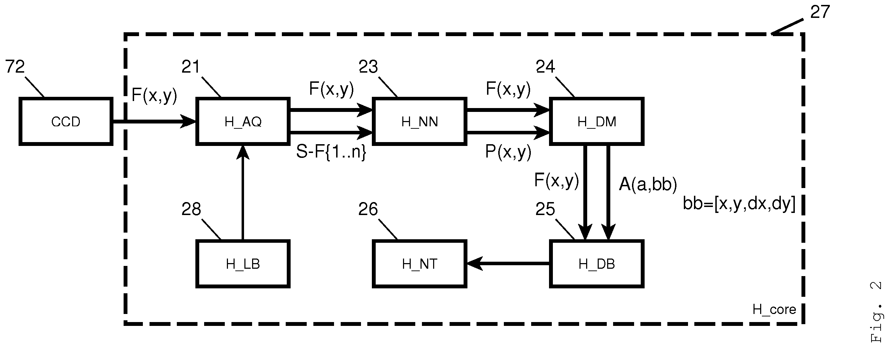

A block diagram of digital frame processing device according to the invention is shown in Fig. 2. The above method steps are executed by respective software modules implemented in FPGA matrix (Virtex 7) or GPU (GeForce GTX 970, 4GB).

H_CORE module 27 is the main module of the system responsible for managing the other modules. It is setting up the configuration which is loaded from the configuration files. The configuration file includes following parameters in Windows .ini format:

- Cfile: configuration file id - string,
- autotest: system autotest trigger, boolean: true/false,
- mode (video acquisition mode, integer:

    1 - video capture from file,
    2 - video capture from IP camera,

- filename: name of filename to process, string,
- camip: ip number of a camera to connect, string,
- camuser: camera user login, string,
- campwd: camera user password, string,
- res: camera resolution, string,
- fps: camera frame per second, int,
- codec: camera codec based on camera's settings, int,
- window: neural network window size, int,
- decay: background learning rate for neural network processing, float,
- probability: $p_{min}$, threshold for minimum accepted probability of neural network, float, for handgun 0.96,
- checkpoint: neural network checkpoint, string,
- maxdetections: minimum consecutive detections required to recognize an event, int, typically 8,
- maxdistance: $d_{max}$ maximum distance between detections in consecutive frames for an event, int, e.g. 80),
- usekalman: trigger to use Kalman filtering, boolean, true/false,
- dbwrite: write data to database trigger, boolean, true/false,
- fx: x-axis rescaling factor for frames before saving into database, float, e.g. 0.25,
- fy: y-axis rescaling factor for frames before saving into database, float, e.g. 0.25,
- fps: stored in database video sequence frames per second, int, e.g. 30,
- visualization: trigger to enable visualization on a screen during processing, boolean, true/false.

The configuration can be reloaded during system operation without restarting. H_CORE module 27 starts others modules and establishes communication between them using data queues. H_CORE module 27 manages other modules, each module can be restarted in case of failure. Stop signal received by H_CORE is broadcasted to other modules in order to stop the whole system in case of the fatal system failure or if system shutdown is required by the maintenance which is triggered by the user.

H_AQ module 21 acquires a frame 31 from the data source such as a video stream from a camera 72, URL or offline file. Data sources can be interchanged during the normal operation without a need of restarting. In an absence of an input image the H_AQ module 21 waits for the input. The acquired frame is checked in order to match the required dimensions in pixels. If that test is failed the acquired frame is dropped from further processing. In order to save computational power only non-repeating frames are processed. To select such frames the Gaussian Mixture Model (GMM) [ Zoran Zivkovic. 2004. Improved Adaptive Gaussian Mixture Model for Background Subtraction. In Proceedings of the Pattern Recognition, 17th International Conference on (ICPR'04) Volume 2 - Volume 02 (ICPR '04), Vol. 2. IEEE Computer Society, Washington, DC, USA, 28-31. DOI: http://dx.doi.org/10.1109/ICPR.2004.479] motion detection algorithm is used. The algorithm detects any changes between current and previous frame. In case of lack of changes the frame is treated as repeated/duplicated and hence dropped. Such frames are thus not processed by other modules. Otherwise frame is put into data queue between H_AQ module 21 and H_NN module 23.

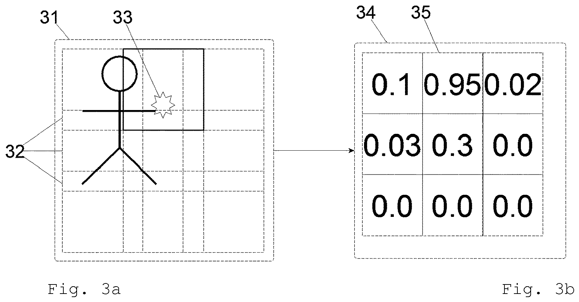

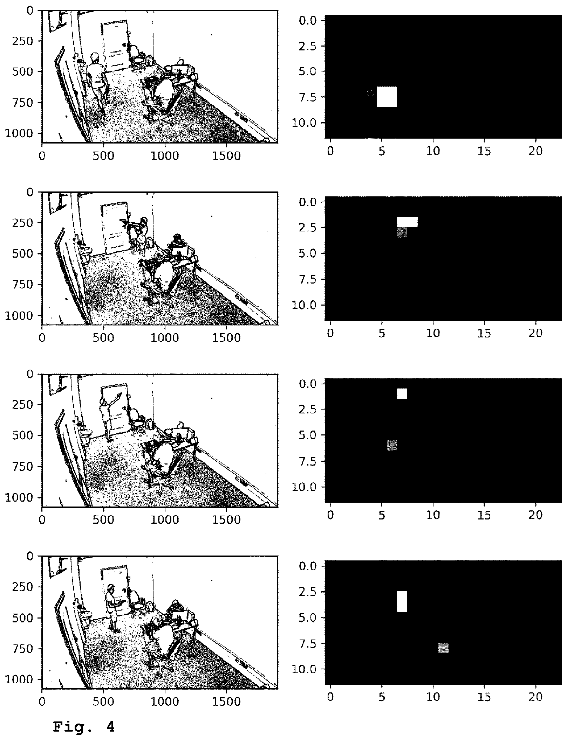

The frame 31 from the frame acquisition H_AQ module 21 is processed in the object detection module H_NN 23 which firstly divides the frame into overlapping square sub-regions having the lower dimension not less than 100 px. The stride of the sub-region must be less than a half of it lower dimension. Each sub-region is afterwards processed by a deep convolutional neural network trained to output probability of dangerous object in the given sub-region. The network consists of a bank of trained digital filters producing image features and the fully connected multilayer perceptron for the final classification. This results in a probability map corresponding to the frame, filled with probabilities corresponding to the particular sub-regions within a frame. A relation between a frame and probability matrix is shown schematically in Fig. 3a and b. In Fig. 3a a frame 31 is shown with a person carrying a dangerous object 33. Frame 31 is divided into sub-regions 32. In Fig. 3b a corresponding probability map 34 is shown. Maximal value 35 in the probability map corresponds to the sub-region containing dangerous object 33. Frame sequence of real life scenario and corresponding probability maps with probabilities represented as intensity is shown in Fig. 4.

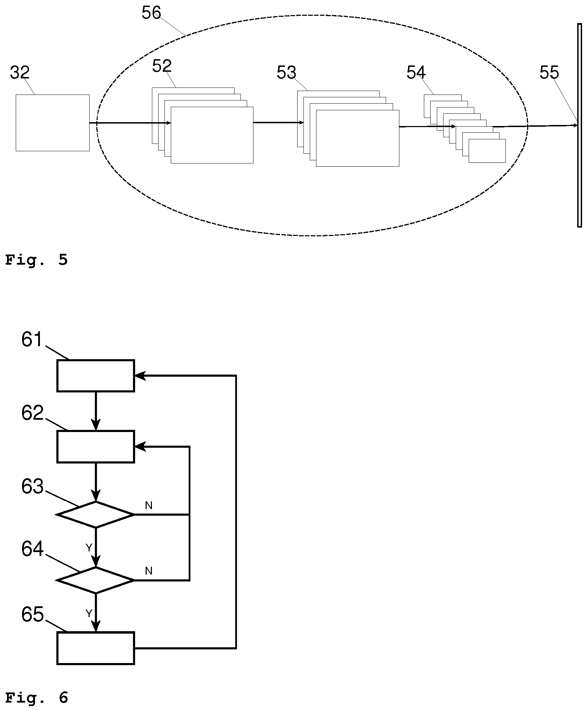

Processing of a sub-region in H_NN module 23 is shown in Fig. 5. The input sub-region 32 of a full frame 31 is fed to convolutional neural network that consists of 5 subsequent convolutional blocks 56. Each of these blocks contains two convolutional layers. One layer has learnable filters of size 3x3 52, and a set of learnable filters of size 1x1 53. The other layer is max pooling layer 54. The output of convolutional blocks is then passed to fully connected layer 55 which outputs the probability that the input frame 51 contains a dangerous tool.

In order to avoid constant misclassification in some of the sub-regions corresponding to stationary background objects resembling the dangerous object the neural network is trained using standard backpropagation algorithm to recognize, the probability map is filtered by a high pass digital temporal filter. The filter works as follows. First using a buffer storing one previous frame, the background of the probability is estimated by the formula:

$$b(t + 1) \; = \; \alpha * b(t) \; + \; (1 - \alpha) * p(t),$$

where p(t) is the neural network output and $\alpha$ is a parameter controlling the speed of background estimation or equivalently impulse response of the digital filter. Then the update to the background u(t) = p(t)-b(t) is computed. In this approach a static misclassification is removed by the subtraction operation. The final output of the object detection H_NN module 23 is the coordinates of the sub-region of the highest value of u(t).

Frame and output from H_NN module 23 are sent to the H_DM module 24 where final decision about raising alarm is made. The decision making flow chart is shown in Fig. 6. In step 61 results are received from the H_NN module 23. The H_DM module 24 in step 62 takes a preconfigured number of N, where N is in range of 6-10 depending on the kind of dangerous tool, subsequent frames to provide reliable alert in case of gun being used and avoid false detections. According to test with the human supervisors, only one false detection daily is acceptable so that supervisors were not biased that detections are likely false. For detection of handgun 8 proved to be the best choice. In step 63 it is tested weather in all 8 subsequent frames the maximal probability of detection exceed a threshold of value. For a handgun threshold of 0.96 was identified as best choice. If the probability is above the threshold for all 8 consecutive frames step 64 is executed otherwise step 62 is executed again. In step 64 it is tested if the distances between consecutive detections (maximal probabilities) is lower than $d_{max}$. If so alarm is raised in step 65. Otherwise step 62 is executed again.

Other numbers of consecutive detections in consecutives frames may also bring good effects. Reasonable effects were obtained for numbers between 6 and 10. Secondly distance between maximums in adjacent frames must not exceed capabilities of a model of human being. There are two approaches to obtain that. They can be used independently or combined.

First approach is the Kalman Filter method with a set of given parameters which predicts the coordinates of the next detection. The parameters is fitted due to specific installation, exemplary matrixes values are:

[[1, 0, 0, 0],
[0, 1, 0, 0]],

[[1, 0, 1, 0],
[0, 1, 0, 1],
[0, 0, 1, 0],
[0, 0, 0, 1]],

[[1, 0, 0, 0],
[0, 1, 0, 0],
[0, 0, 1, 0],
[0, 0, 0, 1]].

The matrix contains weights used in prediction process. The transition matrix is used to determine object's position in the future [Mohinder S. Grewal and Angus P. Andrews. 2014. Kalman Filtering: Theory and Practice with MATLAB (4th ed.). Wiley-IEEE Press . If the distance between prediction and current detection is smaller than the configured parameter the detection is classified as the belonging to the same event.

The second approach is based on a distance calculated between positions of consecutive detections. If the distance is smaller than the configured threshold value $d_{max}$, the detection is classified as belonging to the same event. The distance is calculated according to the Euclidian measure in pixels. Threshold value $d_{max}$ is 0.3 ÷ 1 of the sub-region dimension.

The alarm is raised by user notification H_NT module 26 when the event lasts longer than configured number of frames. 8 was typically used but 6÷10 proved to be a range in which maximal number of false detections daily was reachable. Increasing the value limits the sensitivity of the system while decreasing the value increases the sensitivity of the system. Increased sensitivity results in higher detection probability at a cost of higher false alarm probability. Decreased sensitivity yields the revered effect. The frame and information about raised alarm is put into data queue between H_DM module 24 and H_DB module 26.

Frame and output from decision making H_DM module 24 are send to H_DB module 26 where the data is stored in the database. The H_DB module 26 saves all the alarms and video sequences which caused those alarms. H_DB module 26 aggregates frames for a given period of time to buffer video in the database and in case of the event being detected and alarm raised to store permanently a frame sequence which starts before the event and ends after the event. The final stored video starts N seconds before the event and ends N seconds after. The N value is set by a user, typical value is 15. Increasing the value results storing wider context of an detected event in database, when decreasing the value results reducing amount of data stored in database. Storing permanently only the recording of the context what caused the alarm itself allows future investigation and development of the system as well as evidencing the events despite limited capacity of the database memory. H_DB module 26 provides also real time visualization. The frames with marked detected objects and alarms are displayed on the screen to the users.

User notification module H_NT 25 uses data stored in database and provides a user notification service. The system uses nine types of notifications: sound alarm, visual alarm, email, text messages (SMS), video messages, voice messages (Calls), on-screen alert, API to existing on-site alarm installations, API to remote alarm installations or law enforcement services or any combination of the above. Notification process uses a scheduled address book in order to notify different users depending on the current time. The API allows to integrate the system with third party software.

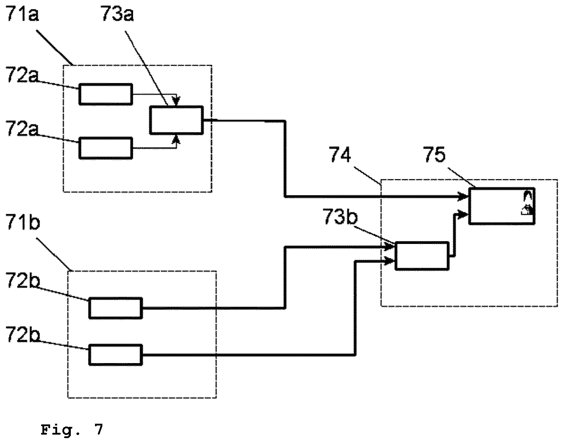

The frame processing device according to the invention is a key element of the monitoring system according to the invention. Exemplary block diagram of the system is shown in Fig. 7. In such system cameras are connected with monitoring center 74 via telecommunication network. Frames from camera are processed with frame processing devices according to the invention before those frames are delivered to the monitoring center 74 and shown to the human supervisor on a screen of a console 75. Alerts generated by the frame processing devices are shown to the supervisor simultaneously with a dangerous object. Information regarding sub-region containing dangerous object is used to draw attention of the human supervisor to particular part of the frame. It is highlighted or encircled in the displayed frame sequence. Frame processing devices can cooperate with single camera individually or be fed with a multiple streams of frames from multiple cameras processed in parallel. This property enables easier scaling of the monitoring system by additional cameras.

It is possible to use single monitoring center 74 with a human operated console 75 with a remote surveillance systems 71a, 71b located in different spatially separated facilities. A block diagram of an embodiment shown in Fig. 7 corresponds to an example of such system.

By way of example each remote surveillance system 71a, 71b, has two cameras 72a, 72b. In the first remote surveillance system 71a two cameras 72a are connected directly via cable to the same digital frame processing device 73a located in the same facility as the remote surveillance system 71a. In the second remote surveillance system 71b, two cameras 72b are connected via digital communication network to a digital frame processing device 73b located in the monitoring center 74 with console 75 having a screen and operated by human supervisor.

Monitoring system according to the invention is modular. Any elements can be connected by cable, optical fibres, wired or wireless telecommunication networks including WiFi, LTE, Ethernet and others. Use of multiples frame processing devices enables easy growth of the system size not limited by the human operated console 75 computational power. Any common or industrial cameras can be used in the system routinely by a person skilled in the art.

Frame processing device according to the invention can be used within an existing system, connected with or more cameras and the monitoring center. The later connection is particularly easy with existing telecommunication networks that are usually provided in monitored facilities. Also radio mobile telecommunication networks can be used for such purpose.

It should be noted that the embodiments of the invention described above are meant only to illustrate rather than limit the invention, which is defined by attached claims. Those skilled in the art will be able to design many alternative embodiments. The invention may be implemented in a computer program including at least code portions for performing steps of a method according to the invention when run on a programmable frame processing device, such as a computer system, signal processing, FPGA matrix or enabling said frame processing device to perform functions of a device according to the invention. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system. The computer program may be provided on a data carrier, such as an optical disc, a hard disk, magnetic disk or solid state disk, stored with data loadable in a memory of a computer system, the data representing the computer program. The data carrier may thus be a tangible data carrier. The data carrier may be a data connection, such as a telephone cable or a network cable.

In the attached patent claims, use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer implemented method for a frame sequence processing to generate an alarm when a dangerous object is being used, including a frame acquisition (11) step, a division into sub-regions (12) step, object identification (13) step and decision making (14) step, in which alert generation (16) step is executed if decision made in decision making step (14) is positive,
**characterized in that**

   division into sub-regions (12) step includes division of the frame into sub-regions that overlap and have at least 100x100 pixels,
   object identification step (13) is executed in sub-region by sub-region manner and includes processing a frame with a deep neural network trained to detect the dangerous object and returns probability of detection for sub-regions of the frame formed into probability map corresponding to the frame,

decision made in decision making (14) step depends on a combination of at least a first criterion and a second criterion applied to the subsequent frames and corresponding probability maps, wherein

the first criterion includes probability of detection within a predefined number N of subsequent frames being above predefined value of $p_{min}$ and

the second criterion includes determination if a distance between sub-regions in which probability of detection above predefined value of $p_{min}$ was observed in subsequent frames is lower than given value $d_{max}$.

2. The method according to claim 1, wherein the value of $d_{max}$ is predetermined in system calibration.

3. The method according to claim 1, wherein the value of $d_{max}$ is a result of Kalman filtering of probability map.

4. The method according to claim 1 or 2 or 3, wherein the frames and the corresponding probability maps are stored into database.

5. The method according to any of the claims from 1 to 4, wherein the frame acquisition includes background detection and removal.

6. The method according to any of the claims from 1 to 4, wherein the probability map is subjected to high pass filtering prior to being used in decision making (14) step.

7. The method according to any of the claims from 1 to 5, further including a load balancing step, in which computational load of is determined and if needed some of the input frames are dropped.

8. A digital frame processing device having a memory and adapted to receive a frame sequence and means to generate an alarm, **characterized in that** it is adapted to execute a method according to any of the claims 1 to 7.

9. A digital frame processing device, according to claim 8 adapted to receive at least two frame sequences in parallel and process them in parallel.

10. A computer program product adapted to control frame processing device, **characterized in that** it comprises a set of instructions causing the device to execute a method according to any of the claims 1 to 7.

11. A monitoring system having at least one camera (72,72a,72b) delivering frames via communication means to console (75) having a display in monitoring center (74), **characterized in that** it has a digital frame processing device (73a, 73b) according to claim 8 or 9 to which camera (72,72a,72b) is connected and said processing device (73a, 73b) executing a method according to any of the claims 1 to 7 to process frames from camera.

12. The monitoring system according to claim 11, having at least two cameras (72a, 72b).

13. The monitoring system according to claim 12, wherein each of the at least two cameras (72a, 72b) are connected to an individual digital frame processing device.

14. The monitoring system according to claim 12, wherein both of the at least two cameras (72a) are connected to the same digital frame processing device (73a).

15. The monitoring system according to any of the claims 11-14, wherein the communication means are telecommunication network.

**Patentansprüche**

1. Computerimplementiertes Verfahren für eine Einzelbildsequenzverarbeitung zum Erzeugen eines Alarms, wenn ein gefährliches Objekt verwendet wird, umfassend einen Einzelbilderfassungsschritt (11), einen Unterteilungsschritt in Teilbereiche (12), einen Objektidentifikationsschritt (13) und einen Entscheidungsfindungsschritt (14), wobei der Alarmerzeugungsschritt (16) ausgeführt wird, wenn die im Entscheidungsfindungsschritt (14) getroffene Entscheidung positiv ist, **dadurch gekennzeichnet, dass**

der Unterteilungsschritt in Teilbereiche (12) eine Unterteilung des Einzelbilds in Teilbereiche umfasst, die sich überlappen und mindestens 100x100 Pixel aufweisen,

der Objektidentifikationsschritt (13) in Teilbereich-für-Teilbereich-Weise ausgeführt wird und ein Verarbeiten eines Einzelbilds mit einem tiefen neuronalen Netzwerk umfasst, das darauf trainiert ist, das gefährliche Objekt zu detektieren, und eine Detektionswahrscheinlichkeit für Teilbereiche des Einzelbilds zurückgibt, die in eine dem Einzelbild entsprechenden Wahrscheinlichkeitskarte abgebildet werden,

die im Entscheidungsfindungsschritt (14) getroffene Entscheidung von einer Kombination aus mindestens einem ersten Kriterium und einem zweiten Kriterium abhängt, die auf die nachfolgenden Einzelbilder und entsprechenden Wahrscheinlichkeitskarten angewendet werden, wobei

das erste Kriterium eine Detektionswahrscheinlichkeit innerhalb einer vordefinierten Anzahl N von nachfolgenden Einzelbildern über einem vordefinierten Wert $p_{min}$ umfasst und

das zweite Kriterium ein Ermitteln umfasst, ob ein Abstand zwischen Teilbereichen, in welchen eine Detektionswahrscheinlichkeit über dem vorbestimmten Wert $p_{min}$ beobachtet wurde, in nachfolgenden Einzelbildern geringer als ein gegebener Wert $d_{max}$ ist.

2. Verfahren gemäß Anspruch 1, wobei der Wert $d_{max}$ bei einer Systemkalibrierung vorbestimmt wird.

3. Verfahren gemäß Anspruch 1, wobei der Wert $d_{max}$ das Ergebnis einer Kalman-Filterung der Wahrscheinlichkeitskarte ist.

4. Verfahren gemäß Anspruch 1 oder 2 oder 3, wobei die Einzelbilder und die entsprechenden Wahrscheinlichkeitskarten in einer Datenbank gespeichert werden.

5. Verfahren gemäß einem der Ansprüche 1 bis 4, wobei die Einzelbilderfassung eine Hintergrunddetektion und -entfernung umfasst.

6. Verfahren gemäß einem der Ansprüche 1 bis 4, wobei die Wahrscheinlichkeitskarte einer Hochpassfilterung unterzogen wird, bevor sie in dem Entscheidungsfindungsschritt (14) verwendet wird.

7. Verfahren gemäß einem der Ansprüche 1 bis 5, ferner umfassend einen Lastausgleichsschritt, in dem die Rechenlast bestimmt wird und bei Bedarf einige der Eingangseinzelbilder fallen gelassen werden.

8. Digitale Einzelbildverarbeitungsvorrichtung, die einen Speicher aufweist und dafür ausgelegt ist, eine Einzelbildsequenz zu empfangen, und Mittel zum Erzeugen eines Alarms aufweist, **dadurch gekennzeichnet, dass** sie dafür ausgelegt ist, ein Verfahren gemäß einem der Ansprüche 1 bis 7 auszuführen.

9. Digitale Einzelbildverarbeitungsvorrichtung gemäß Anspruch 8, die dafür ausgelegt ist, wenigstens zwei Einzelbildsequenzen parallel zu empfangen und sie parallel zu verarbeiten.

10. Computerprogrammprodukt, das dafür ausgelegt ist, eine Einzelbildverarbeitungsvorrichtung zu steuern, **dadurch gekennzeichnet, dass** es einen Satz von Anweisungen umfasst, die bewirken, dass die Vorrichtung ein Verfahren gemäß einem der Ansprüche 1 bis 7 ausführt.

11. Überwachungssystem, das wenigstens eine Kamera (72, 72a, 72b) aufweist, die Einzelbilder über Kommunikationsmittel an eine Konsole (75) liefert, die eine Anzeige in einem Überwachungszentrum (74) aufweist, **dadurch gekennzeichnet, dass** es eine digitale Einzelbildverarbeitungsvorrichtung (73a, 73b) gemäß Anspruch 8 oder 9 aufweist, mit welcher die Kamera (72, 72a, 72b) verbunden ist, und wobei besagte Verarbeitungsvorrichtung (73a, 73b) ein Verfahren gemäß einem der Ansprüche 1 bis 7 ausführt, um Einzelbilder von der Kamera zu verarbeiten.

12. Überwachungssystem gemäß Anspruch 11, das wenigstens zwei Kameras (72a, 72b) aufweist.

13. Überwachungssystem gemäß Anspruch 12, wobei jede der wenigstens zwei Kameras (72a, 72b) mit einer individuellen digitalen Einzelbildverarbeitungsvorrichtung verbunden ist.

14. Überwachungssystem gemäß Anspruch 12, wobei beide der wenigstens zwei Kameras (72a) mit derselben digitalen Einzelbildverarbeitungsvorrichtung (73a) verbunden sind.

15. Überwachungssystem gemäß einem der Ansprüche 11 bis 14, wobei die Kommunikationsmittel ein Telekommunikationsnetzwerk sind.

**Revendications**

1. Procédé mis en œuvre par ordinateur pour traiter une séquence de trames afin de générer une alarme lorsqu'un objet dangereux est en cours d'utilisation, incluant une étape d'acquisition de trames (11), une étape de division selon des sous-régions (12), une étape d'identification d'objet (13) et une étape de rendu de décision (14), dans lequel une étape de génération d'alerte (16) est exécutée si la décision rendue au niveau de l'étape de rendu de décision (14) est positive,
**caractérisé en ce que** :

l'étape de division selon des sous-régions (12) inclut la division de la trame selon des sous-régions qui se chevauchent et qui comportent au moins 100 x 100 pixels,
l'étape d'identification d'objet (13) est exécutée d'une manière sous-région par sous-région et inclut le traitement d'une trame à l'aide d'un réseau neuronal profond soumis à apprentissage pour détecter l'objet dangereux et retourne des probabilités de détection pour les sous-régions de la trame selon une forme de carte de probabilités correspondant à la trame,

la décision rendue au niveau de l'étape de rendu de décision (14) dépend d'une combinaison d'au moins un premier critère et un second critère appliqués aux trames subséquentes et aux cartes de probabilités correspondantes, dans lequel

le premier critère inclut la probabilité de détection à l'intérieur d'un nombre prédéfini N de trames subséquentes qui est au-delà d'une valeur prédéfinie de $p_{min}$

et

le second critère inclut la détermination de si une distance entre des sous-régions dans lesquelles la probabilité de détection au-delà de la valeur prédéfinie de $p_{min}$ a été observée dans des trames subséquentes est inférieure à une valeur donnée $d_{max}$.

2. Procédé selon la revendication 1, dans lequel la valeur de $d_{max}$ est prédéterminée lors d'un étalonnage système.

3. Procédé selon la revendication 1, dans lequel la valeur de $d_{max}$ est un résultat d'un filtrage de Kalman de carte de probabilités.

4. Procédé selon la revendication 1 ou 2 ou 3, dans lequel les trames et les cartes de probabilités correspondantes sont stockées dans une base de données.

5. Procédé selon l'une quelconque des revendications 1 à 4, dans lequel l'acquisition de trames inclut la détection et la suppression de l'arrière-plan.

6. Procédé selon l'une quelconque des revendications 1 à 4, dans lequel la carte de probabilités est soumise à un filtrage passe-haut avant son utilisation au niveau de l'étape de rendu de décision (14).

7. Procédé selon l'une quelconque des revendications 1 à 5, incluant en outre une étape d'équilibrage de charge selon laquelle une charge de calcul afférente est déterminée et si nécessaire, certaines des trames entrées sont abandonnées.

8. Dispositif de traitement de trames numériques comportant une mémoire et adapté pour recevoir une séquence de trames et comportant un moyen pour générer une alarme, **caractérisé en ce qu'**il est adapté pour exécuter un procédé selon l'une quelconque des revendications 1 à 7.

9. Dispositif de traitement de trames numériques selon la revendication 8, adapté pour recevoir au moins deux séquences de trames en parallèle et pour les traiter en parallèle.

10. Progiciel adapté pour commander un dispositif de traitement de trames, **caractérisé en ce qu'**il comprend un ensemble d'instructions qui forcent le dispositif à exécuter un procédé selon l'une quelconque des revendications 1 à 7.

11. Système de surveillance comportant au moins une caméra (72, 72a, 72b) qui fournit des trames via un moyen de communication à une console (75) qui comporte un affichage dans un centre de surveillance (74), **caractérisé en ce qu'**il comporte un dispositif de traitement de trames numériques (73a, 73b) selon la revendication 8 ou 9 auquel la caméra (72, 72a, 72b) est connectée et ledit dispositif de traitement (73a, 73b) exécutant un procédé selon le procédé selon l'une quelconque des revendications 1 à 7 pour traiter les trames en provenance de la caméra.

12. Système de surveillance selon la revendication 11, comportant au moins deux caméras (72a, 72b).

13. Système de surveillance selon la revendication 12, dans lequel chacune des au moins deux caméras (72a, 72b) est connectée à un dispositif de traitement de trames numériques individuel.

14. Système de surveillance selon la revendication 12, dans lequel les au moins deux caméras (72a) sont toutes deux connectées au même dispositif de traitement de trames numériques (73a).

15. Système de surveillance selon l'une quelconque des revendications 11 à 14, dans lequel le moyen de communication est un réseau de télécommunication.

Fig. 1

Fig. 2

Fig. 3a

Fig. 3b

Fig. 4

Fig. 5

Fig. 6

Fig. 7

EP 3 534 294 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6028626 A
- US 9524426 B
- WO 2008046662 A1

**Non-patent literature cited in the description**

- **MITCHELL ; MELANIE.** An Introduction to Genetic Algorithms. MIT Press, 1996
- Improved Adaptive Gaussian Mixture Model for Background Subtraction. **ZORAN ZIVKOVIC.** Proceedings of the Pattern Recognition, 17th International Conference on (ICPR'04) Volume 2 - Volume 02 (ICPR '04). IEEE Computer Society, 2004, vol. 2
- **MOHINDER S. GREWAL ; ANGUS P. ANDREWS.** Kalman Filtering: Theory and Practice with MATLAB. Wiley-IEEE Press, 2014

16